# FASCICULE DE BREVET EUROPEEN

(11) **EP 4 267 523 B1**
(45) Date de publication et mention de la délivrance du brevet: **16.04.2025**
(21) Numéro de dépôt: 21854676.0
(22) Date de dépôt: 22.12.2021
(51) Int. Cl.: C03C 8/14, C03B 1/00, C03C 17/02, C03C 17/245, C03C 17/34, C03C 17/36, C03C 27/10

(54) **VITRAGE DE TOIT POUR VEHICULE AUTOMOBILE**
DACHVERGLASUNG FÜR KRAFTFAHRZEUGE
MOTOR VEHICLE ROOF GLAZING

(30) Priorité: 22.12.2020 FR 2013928
(43) Date de publication de la demande: 01.11.2023
(73) Titulaire: Saint-Gobain Glass France, 92400 Courbevoie (FR)
(72) Inventeur: CHAHBOUNE, Kamel, 02200 Soissons (FR); YON, Alexia, 60500 Chantilly (FR); JAMART, Juliette, 60200 Compiègne (FR)
(74) Mandataire: Saint-Gobain Recherche
(86) Numéro de dépôt international: PCT/FR2021/052427
(87) Numéro de publication internationale: WO 2022/136802

(56) Documents cités:
- EP-A2- 0 636 588
- WO-A1-2019/239055
- WO-A1-2022/123162
- FR-A1- 2 703 043
- FR-A1- 2 705 335

## Description

La présente invention concerne un toit de véhicule automobile (désigné ci-après plus simplement par « toit automobile »), incorporant un vitrage ainsi que son procédé de fabrication.

De nombreux équipements de confort existent dans les véhicules automobiles, en particulier des équipements intégrés dans l'habitacle des véhicules, comme les toits ouvrants, qui peuvent être vitrés ou non. Ces parties de toits spécifiques, quand elles sont vitrées, permettent notamment de faire rentrer plus de lumière dans le véhicule, de bénéficier d'une vision agréable du ciel pour les passagers, et le cas échéant de laisser entrer de l'air frais, sans les inconvénients d'une simple ouverture réalisée dans le toit. Les vitrages utilisés pour ces toits ouvrants vitrés sont traditionnellement transparents pour des raisons d'esthétique et de confort et afin d'autoriser une vision extérieure agréable, et peuvent être également en verre teinté afin notamment de protéger les usagers du rayonnement solaire.

Le cas échéant, ces vitrages de toits automobiles peuvent être munis à leur périphérie d'un cadre opacifiant, généralement réalisé en émail, afin de recouvrir notamment la structure de l'habitacle sur laquelle le vitrage est monté (par exemple pour cacher un cordon de colle), ce cadre (ou cette bande périphérique) étant usuellement de faibles dimensions pour ne pas nuire au clair de vue et à la vision recherchés, et de couleur classiquement noire. Alternativement, des impressions fines d'émail blanc peuvent aussi être utilisées pour permettre la diffusion de la lumière produite par des diodes fixées dans la tranche d'un verre feuilleté. Toutes ces impressions localisées d'émail sont traditionnellement réalisées par sérigraphie, en utilisant des écrans ou gabarits de sérigraphie appropriés et spécifiques à chaque taille de vitrage.

FR 2 705 335 A1, WO 2019/239055 A1, FR 2 703 043 A1, et EP 0 636 588 A2 divulguent des vitrages comprenant une feuille de verre, dans lesquels la feuille de verre est revêtue d'une couche d'émail. Ladite couche d'émail est appliquée sur le substrat de verre par sérigraphie. En outre, aucun de ces documents ne concerne des vitrages de toit de véhicule.

Le document WO 2022/123161 A1 a pour but d'améliorer la résistance mécanique d'un vitrage muni d'émail, de motifs électroconducteurs et d'un connecteur soudé à l'aide d'un alliage de soudure. Cette demande divulgue un procédé d'obtention d'un vitrage comprenant les étapes de dépôt d'un revêtement d'émail par impression jet d'encre et d'une couche électroconductrice formant des motifs.

La présente invention a cherché à mettre au point de nouveaux toit automobile élargissant la gamme des produits existants tout en étant compatibles avec les exigences du marché automobile et les contraintes de fabrication dans ce domaine, et en particulier de nouveaux vitrages pour toit automobile offrant des possibilités plus variées de personnalisation à la demande tout en garantissant un bon confort pour l'utilisateur, l'obtention de ces nouveaux vitrages restant suffisamment simple et compatible avec les contraintes des procédés industriels pour automobiles.

Cet objectif a été atteint grâce à un procédé de fabrication d'un toit de véhicule automobile incorporant un vitrage, dans lequel on applique par impression numérique, en particulier par jet d'encre, sur au moins 40% de la surface de l'une des faces d'au moins une feuille de verre, au moins une couche opacifiante d'encre(s), en particulier au moins une couche d'encre(s) colorée(s), telle(s) que la composition de la ou lesdites encres comprend au moins une fritte de verre, et le cas échéant un ou des pigment(s) inorganique(s), avec une valeur D90 de la distribution granulométrique inférieure à 2 µm, et telle(s) que la ou lesdites encres présentent une viscosité comprise entre 1 et 50 mPa.s, la ou lesdites encres comprenant en outre un agent et/ou composant anti-adhésif et/ou au moins un agent anti-adhésif et/ou au moins une couche anti-adhésive étant en outre appliqué(e) sur au moins une couche d'encre(s) et/ou sur au moins une feuille de verre. Le procédé selon l'invention peut être caractérisé en ce que l'impression est réalisée en utilisant une machine d'impression à passage unique. Le procédé selon l'invention peut être caractérisé en ce que l'imprimante utilisée est équipée de six séries de têtes d'impression pour permettre l'impression par un jeu de six couleurs. Le procédé selon l'invention peut être caractérisé en ce que la tension superficielle de l'encre est comprise entre 20 et 40 mN/m.

Un produit obtenu par ledit procédé a également permis d'atteindre cet objectif, ce produit étant un toit de véhicule automobile susceptible d'être obtenu par ledit procédé, ledit toit de véhicule incorporant un vitrage comprenant :
- une ou plusieurs feuilles de verre, au moins une feuille de verre étant revêtue sur au moins 40% de la surface d'au moins une face par au moins une couche opacifiante d'encre(s), telle(s) que la composition de la ou lesdites encres comprend au moins une fritte de verre, et
- au moins une couche d'encre(s) et/ou au moins une feuille de verre étant revêtue d'au moins un agent anti-adhésif et/ou d'au moins une couche anti-adhésive, et/ou
- au moins une couche d'encre(s) comprenant au moins un agent et/ou composant anti-adhésif. Le toit de véhicule automobile selon l'invention peut être caractérisé en ce que la couche opacifiante d'encre(s) est au moins une couche d'encre(s) colorée(s).
Le toit de véhicule automobile selon l'invention peut être caractérisé en ce que la composition de la ou lesdites encres comprend un ou des pigment(s) inorganique(s). Le toit de véhicule automobile selon l'invention peut être caractérisé en ce que ledit vitrage est un vitrage monolithique formé d'une seule feuille de verre, ladite feuille étant revêtue par au moins une couche de la ou desdites encres sur une face, en particulier la face F2, ou caractérisé en ce que ledit vitrage est préférentiellement un vitrage feuilleté formé d'au moins deux feuilles de verre et d'un intercalaire, au moins l'une desdites feuilles de verre étant revêtue par au moins une couche de la ou desdites encres sur une face, en particulier la face F2, F3, ou F4. 9. Le toit de véhicule automobile selon l'invention peut être caractérisé en ce que ledit vitrage présente une transmission lumineuse TL inférieure à 10% en particulier inférieure ou égale à 0.1%, ou une densité optique supérieure ou égale à 1, en particulier supérieure ou égale à 3. Le toit de véhicule automobile selon l'invention peut être caractérisé en ce que deux décors différents sont imprimés, pour un effet différent à l'extérieur et à l'intérieur de l'habitacle. Le toit de véhicule automobile selon l'invention peut être caractérisé en ce que plusieurs couches d'encres sont superposées sur une même face en vue de réaliser une double image, par exemple une première couche ou impression formant une première image, une deuxième couche ou impression étant une couche de blanc, et une troisième couche ou impression formant une seconde image. Le toit de véhicule automobile selon l'invention peut être caractérisé en ce que ledit vitrage est muni, sur une même face et/ou sur au moins deux faces différentes de feuille(s) de verre du vitrage, d'au moins deux revêtements différents ou deux couches différentes dont au moins une couche de la ou desdites encres, la seconde couche ou le second revêtement étant soit une seconde couche minérale formée d'encre(s) d'impression numérique, soit une couche à effet décoratif différente de ladite ou desdites couches d'encre(s), soit une couche ou un revêtement ou un film ou feuillet à effet fonctionnel supplémentaire, notamment en terme de confort thermique, telle qu'un revêtement bas-émissif ou de contrôle solaire.

La présente invention a permis de mettre au point une solution de décoration compatible avec les lignes de production automobiles et élargissant la gamme des produits pour toits automobiles existants en permettant de réaliser toute une nouvelle variété de décors à la demande, et en particulier de décors en couleur(s), ces décors étant obtenus de façon simple et économique. Selon la ou les faces sur lesquelles sont déposées une ou des couches d'encre(s) (en particulier et avantageusement une ou des couche(s) d'encre(s) colorée(s)), on peut réaliser un ou plusieurs décors donnant des aspects différents selon que le vitrage est observé d'un côté ou de l'autre. L'invention permet par exemple d'obtenir un toit vitré opaque conservant l'esthétique du verre et sa brillance à l'extérieur du véhicule, et une décoration personnalisée à l'intérieur, décoration imitant par exemple un paysage, un ciel ensoleillé ou une nuit étoilée, ou des matières (par exemple un effet carbone, bois ou cuir), en fonction du client et/ou de la décoration intérieure du véhicule, etc, ou inversement d'avoir un rendu vitré opaque à l'intérieur du véhicule et une décoration personnalisée à l'extérieur, voire deux décorations personnalisées identiques ou différentes à l'intérieur et à l'extérieur.

L'impression par voie numérique (cette technique permettant d'imprimer des documents directement depuis des données informatiques) utilisée selon l'invention offre des possibilités de décoration infinies, à partir notamment de n'importe quelle photo possédant une bonne résolution, par exemple supérieure ou égale à 700 dpi (ou « ppp » ou « pixels par pouce »), ou d'un fichier vectoriel. Outre les possibilités variées de décoration, la méthode peut également être utilisée pour obtenir des effets techniques, tels que des effets anti-reflets (la couche imprimée étant par exemple sélectionnée pour être mate) ou anti-traces de doigts, ou un revêtement fonctionnel, par exemple permettant des interactions avec la lumière, ou présentant des pistes conductrices, etc.

Outre le fait de permettre de produire des impressions de haute qualité en haute résolution (de type photographie) et à grande vitesse, sur, le cas échéant, de petites séries ou en personnalisant à la pièce sans pour autant nécessiter de matériel coûteux ou de changements complexes de matériels, l'impression par voie numérique est adaptable aux contraintes géométriques des produits (méthode sans contact) et permet d'obtenir une grande variété de décors avec peu de difficultés par rapport aux méthodes de sérigraphie actuellement utilisées dans l'automobile. L'image à imprimer peut être stockée numériquement, évitant le recours à des écrans, des gravures, etc, contrairement aux méthodes sérigraphiques qui nécessitent un écran spécifique à chaque décor et à chaque produit à revêtir. Elle permet l'impression de surfaces de grandes dimensions et offre un gamut étendu de couleurs reproductibles à l'aide d'un jeu réduit de couleurs primaires, alors que les méthodes sérigraphiques requièrent des écrans différents à chaque couleur. Le décor peut être imprimé de manière très flexible à partir de fichiers d'image générés par ordinateur et la technique d'impression peut être interfacée avec des dispositifs de traitement d'images permettant de modifier facilement et rapidement des images modèles pour varier davantage les impressions et offrir une grande liberté de conception. Des arrêts ou nettoyages ne sont pas nécessaires entre les différents décors et le gaspillage d'encre est évité, l'encre n'étant déposée qu'aux endroits nécessaires.

Un inconvénient de l'impression digitale étant toutefois la petite taille des buses des têtes d'impression, la présente invention a également sélectionné des encres permettant l'impression recherchée pour l'application souhaitée sans soucis notamment d'obstruction des buses.

Il convient de noter que le dépôt d'encres a déjà été tenté sur verre, principalement pour la décoration de verre architectural, cependant les solutions développées jusqu' à présent se sont révélées peu adaptées pour la décoration de vitrages automobiles en raison notamment de problèmes liés aux impératifs de fabrication automobiles (tels que la vitesse élevée des lignes de production) ou encore de problèmes de collage aux matrices de formage des verres automobiles. Par ailleurs, les formulations utilisées habituellement pour le dépôt par sérigraphie dans l'automobile ne peuvent quant à elles pas être utilisées directement dans les méthodes d'impression numérique de type jet d'encre, ces formulations, en particulier visqueuses et de granulométrie supérieure à 5 µm, étant susceptibles de boucher les buses d'impression.

En particulier, les imprimantes à passages multiples (« multipass printers ») utilisées jusqu'à présent pour le verre architectural ont montré des productivités trop basses non compatibles avec les temps de cycle typiques des marchés de l'automobile (les étapes de revêtement devant généralement ne pas excéder 60 s par verre). De plus, les vitrages utilisés pour les toits automobiles étant généralement bombés, il n'était pas envisageable d'appliquer des revêtements sur une grande surface, en particulier sur des parties devant être amenés au contact d'autres verres ou de matrices de formage ou de bombage, en raison des problèmes de collage pouvant survenir lors du formage ou du bombage ou pliage ou cintrage.

Jusqu'à la présente invention, il n'existait donc pas de technique permettant de décorer facilement et économiquement les vitrages de toits automobiles, tout en respectant les contraintes, notamment thermiques et mécaniques, propres à cette application, et tout en offrant une grande flexibilité et de nombreuses variations de décors possibles.

Le toit de véhicule automobile incorporant le vitrage selon l'invention peut comprendre une ou plusieurs feuilles de (ou « en ») verre. Il peut en particulier s'agir d'un vitrage monolithique, constitué d'une seule feuille de verre trempée ou renforcée (thermiquement ou chimiquement), ou il peut s'agir d'un vitrage feuilleté, constitué d'au moins deux feuilles de verre assemblées par l'intermédiaire d'un intercalaire, comme détaillé par la suite.

Les feuilles de verre (ou « vitres » ou « plaques de verre » ou « substrats de verre » ou "verres") sont avantageusement des feuilles de verre (avantageusement minéral) sodocalcique, et peuvent être transparentes et incolores (notamment en verre clair ou « extra clair » c'est-à-dire de transmission lumineuse TL supérieure à 90%) ou peuvent être colorées ou teintées (généralement dans la masse). Elles sont habituellement de forme géométrique, en particulier quadrilatérale ou rectangulaire ou carrée, et peuvent être plates ou bombées/courbées. Préférentiellement elles sont bombées, leur forme épousant en particulier la courbure du toit. Elles sont par ailleurs généralement lisses, c'est-à-dire dénuées de texturations.

Les feuilles de verre présentent préférentiellement une épaisseur comprise (pour chacune) entre 0,7 mm et 6 mm, en particulier entre 1 mm et 4 mm, par exemple une épaisseur standard de 1,6 mm ou 2,1 mm. L'épaisseur totale du vitrage est de préférence inférieure à 5 mm.

Préférentiellement, le vitrage de toit automobile selon l'invention est un vitrage feuilleté comprenant au moins deux feuilles de verre, lesdites feuilles étant liées entre elles adhésivement par l'intermédiaire d'un intercalaire de feuilletage, ce vitrage comprenant plus précisément :
- une première feuille de verre, dite « extérieure » c'est-à-dire destinée à être positionnée à l'extérieur de l'habitacle du véhicule, et présentant deux faces principales (faces de plus grande dimension) appelées respectivement face 1 (ou F1), face devant être tournée vers l'extérieur, et face 2 (ou F2), face devant être tournée vers l'intercalaire,
- un intercalaire de feuilletage (ou intercalaire ou film intercalaire ou feuille intercalaire ou intermédiaire),
- une deuxième feuille de verre, dite « intérieure » c'est-à-dire destinée à être positionnée à l'intérieur de l'habitacle, et présentant deux faces principales appelées respectivement face 3 (ou F3), cette face étant tournée vers l'intercalaire, et face 4 (ou F4), cette face étant tournée vers l'habitacle.

Il convient de noter que les termes "premier" ou « deuxième » ci-dessus sont uniquement utilisés pour distinguer les diverses feuilles et ne font pas référence à un ordre de dépôt ou d'agencement.

Dans le cas du feuilleté, la feuille de verre extérieure est généralement d'épaisseur d'au plus 2,1 mm, la feuille intérieure pouvant être du même ordre d'épaisseur ou d'épaisseur inférieure à celle de la feuille extérieure, l'un et/ou l'autre verre pouvant être, ou non, trempé(s) chimiquement ou thermiquement (pour des questions de sécurité).

Le cas échéant, l'un et/ou l'autre verre peut être teinté, selon le positionnement et le choix du décor, et/ou l'intercalaire de feuilletage peut être coloré, pour limiter la pénétration de chaleur dans l'habitacle en absorbant les infra-rouges.

L'intercalaire de feuilletage se présente sous forme d'un ou plusieurs feuillet(s) ou film(s) ou feuille(s), thermofusible(s) et adhésif(s), en matière polymérique, notamment formé(s) d'au moins un polymère ou copolymère thermoplastique, tel que l'éthylène-acétate de vinyle (EVA), le polyvinylbutyral (PVB) ou le polyuréthane (PU), ou de mélanges ou copolymères ou dérivés de ceux-ci, l'intercalaire étant le plus généralement en PVB. Il peut aussi être composite (par exemple un composite de PVB et d'un film de polyester ou d'un film de polytéréphtalate d'éthylène ou d'un plastifiant pour des propriétés d'amortissement vibro-acoustique). L'épaisseur totale de cet intercalaire (qu'il soit en un ou plusieurs feuillets) est généralement inférieure à 1 mm, en particulier de 0.7 mm ou 0.3 mm, cet intercalaire pouvant être transparent, clair, extraclair ou éventuellement teinté.

Comme indiqué selon l'invention, la couche d'encre(s) déposée ou le revêtement comprenant ladite couche d'encre(s) (ou les couches d'encre(s) déposées l'une sur l'autre quand il y en a plusieurs superposées), revêt au moins l'une des faces principales d'une feuille de verre du vitrage selon l'invention sur au moins 40% de sa surface, de préférence au moins 50% de sa surface, et de façon particulièrement préférée au moins 75% de sa surface, voire sur la totalité de sa surface.

Par couche d'encre(s), on entend que la couche peut être formée d'une ou plusieurs encres (chacune répondant avantageusement à la définition donnée dans l'invention) le cas échéant mélangées et/ou superposées, en simultané (dépôts simultanés par exemple lors d'une même passe d'imprimante jet d'encre) et/ou éventuellement consécutivement (plusieurs passes formant ladite couche). En particulier, plusieurs encres de couleurs primaires peuvent être superposées pour former la couche, l'image imprimée étant ainsi formée d'un grand nombre de petites taches ou gouttes d'encres juxtaposées.

L'épaisseur de chaque couche d'encre(s) est en particulier comprise entre 3 et 8 microns. Le cas échéant plusieurs couches d'encre(s) peuvent être déposées l'une sur l'autre, chaque dépôt étant alors suivi d'un séchage, comme décrit ultérieurement, l'épaisseur totale du revêtement formé dans ce cas étant préférentiellement comprise entre 3 et 20 microns. Par épaisseur d'une couche, on entend l'épaisseur géométrique (également appelée physique ou réelle), cette épaisseur étant mesurée une fois l'encre traitée thermiquement pour éliminer le solvant et autre(s) partie(s) organique(s) éventuelle(s) de la composition.

Les encres utilisées selon l'invention sont des encres essentiellement minérales (formées uniquement de composants inorganiques/minéraux à l'exception du solvant et des additifs amenés à être éliminés lors du processus de formage du vitrage ou de cuisson des encres) et sont en particulier des encres dites « céramiques », présentant une formulation à base d'émail sélectionnée pour être compatible avec l'impression souhaitée. Elles sont notamment formées d'au moins une fritte de verre (ou d'un mélange de frittes de verre), destiné(e)(s) à fondre lors du traitement thermique ultérieur pour former une matrice vitreuse qui va se lier au substrat. La composition des encres selon l'invention peut également comprendre un ou des pigments qui sont fixés au substrat par la fritte, le ou les pigments étant avantageusement des pigments inorganiques/minéraux (contrairement aux formulations pour jet d'encre usuelles comprenant généralement des pigments organiques). Lesdits pigments présentent en particulier un diamètre moyen inférieur à 500 nm, plus préférentiellement un diamètre moyen compris entre 100 et 300 nm. Le diamètre moyen peut être mesuré à l'aide d'un microscope électronique à balayage (MEB) ou Scanning Electron Microscopy (SEM) en anglais. Lesdits pigments présentent l'avantage de ne pas être altérés lors du procédé, notamment après séchage et cuisson des encres. Outre cette fraction solide la composition des encres comprend également initialement une fraction liquide, formée d'au moins un solvant et le cas échéant d'un ou plusieurs additifs.

La fritte de verre est de préférence à base de borosilicate de bismuth, et/ou éventuellement à base de borosilicate de zinc. La fraction (ou pourcentage) massique (ou en poids) de la fritte du verre dans l'encre minérale est préférentiellement comprise entre 10 et 50%, en particulier entre 15 et 50%. Les pigments peuvent être tout pigment minéral connu ou tout mélange de pigments minéraux connus, et sont en particulier à base d'un ou plusieurs composés ou oxydes tels que l'oxyde de chrome, le dioxyde de titane, l'oxyde de fer, le titanate de cobalt, le chromate de cobalt, le silicate de cobalt, le chromate d'étain, le zirconate-silicate de fer, le chromate de manganèse, le phosphate de cobalt, etc. La fraction massique du ou des pigments dans l'encre minérale est préférentiellement comprise entre 1 et 25%.

La fraction massique de la fraction solide (fritte et pigments) dans l'encre minérale est préférentiellement comprise entre 10 et 60%, les pourcentages relatifs de pigment(s) et de fritte(s) dans la fraction solide permettant notamment de régler la densité optique et l'opacité de l'encre.

La fraction liquide (représentant généralement de 40 à 90% en poids de l'encre) est généralement formée d'au moins un solvant ou milieu de dispersion, et d'un ou plusieurs additifs, dont par exemple au moins une résine faisant office de liant et permettant de maintenir les propriétés de l'encre et la structure des dépôts jusqu'à leur traitement thermique, le taux d'additif(s) n'excédant pas généralement 10% en poids.

Comme solvant (représentant généralement au moins 30% en poids de l'encre, et en particulier de 30 à 50%), on peut utiliser par exemple un ou des alcools, éthers de glycols, lactates, éthers de glycol acétates, aldéhydes, cétones, huiles, hydrocarbures aromatiques, etc, ou plus simplement de l'eau.

Comme additifs (représentant moins de 10% en poids de l'encre), on peut utiliser notamment un liant (par exemple une ou des résines acryliques ou akydes), un ou des additifs permettant d'ajuster les propriétés physiques de l'encre tels qu'un ou des agents dispersants (tels que ceux commercialisés par la société Byk sous la référence Disperbyk permettant de prévenir la floculation et/ou la sédimentation de la phase solide, un ou des tensioactifs (tels que ceux commercialisés par la société Byk sous la référence 301, 302 ou 337), des agents nivelants (tels que ceux commercialisés par la société Evonik sous la référence Tego), un ou des antimousses (tels que ceux commercialisés sous la référence 51, 52, 53 par la société Byk), un ou des agents de rhéologie, etc.

La dimension des grains ou particules constituant la phase solide minérale (incluant en particulier la ou les frittes et pigments) des encres est choisie conformément à l'invention telle que la valeur D90 de leur distribution granulométrique est inférieure à 2 µm, de préférence inférieure à 1 µm, plus particulièrement inférieure à 0.9 µm.

On évalue dans la présente invention la distribution de tailles des particules en utilisant le percentile D90, signifiant que 90% des particules de l'ensemble de particules considéré présentent une taille inférieure à D90. On appelle taille ou dimension d'une particule son diamètre équivalent, c'est-à-dire le diamètre de la sphère qui se comporterait de manière identique lors de l'analyse granulométrique des particules (ou de la poudre formée desdites particules) formant (initialement) la phase solide minérale considérée, la distribution granulométrique (ensemble des tailles de particules) étant mesurée en particulier par granulométrie laser selon la norme ISO 13320:2009. La taille voulue des particules est en particulier obtenue par broyage.

Comme indiqué selon l'invention, la viscosité au dépôt des encres utilisées est également comprise entre 1 et 50 mPa.s, notamment entre 5 et 20 mPa.s, la viscosité étant mesurée à la température d'application de l'encre envisagée (généralement entre 30 et 40°C). Avantageusement également, la tension superficielle (ou tension de surface) de l'encre est comprise entre 20 et 40 mN/m.

Comme précédemment défini, la solution selon l'invention combine également, avec le recours à l'impression numérique de type jet d'encre et la sélection des encres pour effectuer un revêtement opacifiant coloré à la demande sur une grande surface, la sélection de caractéristiques anti-adhésives (ou « anti-stick ») pour la ou les encres (en particulier leur(s) fritte(s)) et/ou l'ajout de matériaux (sous forme d'agent(s)/additif(s) antiadhésif(s) ou, le cas échéant, de couche(s) antiadhésives) dans la composition de l'encre ou sur l'encre ou le verre pour éviter le collage pendant toute étape de formage.

Les propriétés ou caractéristiques « anti-adhesives » selon l'invention signifient une non-adhérence de la ou des couches d'encre(s) à un autre verre que celui sur lequel elles sont déposées ou à un outil de pressage lors d'une opération de bombage ou formage. Ces propriétés sont évaluées en effectuant un bombage gravitaire d'un verre revêtu de la couche d'encre(s) à tester pendant 10 minutes à 640°C et en vérifiant qu'aucun transfert ou collage de la couche n'a eu lieu sur le verre de test. Ces propriétés sont obtenues en particulier par le choix de la ou des encres, comprenant alors un agent/additif ou composant anti-adhésif, c'est-à-dire en particulier apte à cristalliser au moins partiellement de manière à ne pas adhérer aux différents éléments avec lesquels la ou les encres peuvent être au contact, la cristallisation en question étant obtenue notamment en effectuant une phase de chauffe et de refroidissement de la couche, en particulier avant les autres opérations de traitement thermique liées au bombage ou formage, ces phases de chauffe puis refroidissement permettant la cristallisation, au moins partielle, de la couche. Alternativement, voire cumulativement, ces propriétés peuvent être aussi obtenues en appliquant au moins un agent anti-adhésif et/ou au moins une couche anti-adhésive sur au moins une feuille de verre (devant notamment être amenée au contact du verre revêtu d'encres) et/ou sur ladite ou lesdites couches d'encre(s).

Dans un premier mode de réalisation, les propriétés anti-adhésives sont ainsi obtenues par le choix de la ou des encres (comprenant un agent/additif ou composant apte à cristalliser au moins partiellement). En particulier l'encre, notamment dans sa fraction solide, peut contenir un ou des additifs de nucléation, à un taux par exemple d'au moins 0.05% dans ce cas et n'excédant pas notamment 10% en poids de l'encre, ce(s) additif(s) de nucléation étant choisi(s) par exemple parmi les silicates de zinc, les silicates d'aluminium, les borates de zinc, les titanates de zinc, les silicates de bismuth, les oxydes de bismuth, les titanates de bismuth, les produits réfractaires ayant des points de fusion supérieurs à 650°, ou leurs combinaisons

Dans un autre mode de réalisation permettant d'éviter les problèmes d'adhérence, au moins une feuille de verre ou au moins une couche d'encre(s) selon l'invention est revêtue en outre d'au moins un agent anti-adhésif, par exemple pulvérisé ou saupoudré à sa surface, ou d'au moins une couche anti-adhésive, par exemple déposée sur sa surface par pulvérisation, impression digitale, rideau, rouleau ou sérigraphie, par exemple une couche d'émail anti-adhésif commercialisé par la société Prince Minerals sous la référence DV788380, ou une couche d'émail anti-adhésif commercialisé par la société Johnson Matthey sous la référence 1L6030, ou encore une couche d'encre anti-adhésive commercialisée par la société Prince Minerals sous la référence DJ70474.

Ces différents modes selon l'invention peuvent être alternatifs voire utilisés en combinaison. Grâce aux propriétés anti-adhésives obtenues, les décors imprimés peuvent être déposés sur des surfaces qui se trouvent à l'intérieur d'un vitrage feuilleté (face F2 ou face F3), ce qui permet d'utiliser des encres sans être limité par les spécifications de durabilité (résistances mécaniques et chimiques) requises pour l'application automobile, les décors étant protégés. Ces propriétés sont également avantageuses pour un vitrage monolithique trempé dont la surface imprimée peut être mise au contact avec un moule de pressage ou pour un feuilleté présentant également une face extérieure décorée.

Le fait d'utiliser, dans le procédé selon l'invention, une encre anti-adhésive ou un agent anti-adhésif ou une couche anti-adhésive permet ainsi d'éviter, suite au traitement thermique des feuilles, en particulier quand elles sont feuilletées, les problèmes de collage de l'encre, en particulier lors des étapes de formage ou de bombage utilisées dans l'industrie du verre automobile. Lorsque la couche d'encre est en contact avec une autre surface, par exemple une surface de moule, l'article peut être moulé et cuit en même temps sans problèmes de transfert ou de collage des encres. Il en est de même lorsque la couche d'encre et en contact avec un second verre lors d'une opération de bombage. Les opérations de bombage ou de formage ne sont ainsi pas entravées par le phénomène de collage évoqué ci-dessus, et les décors appliqués peuvent conservent leur intégrité.

Les couches ou compositions d'encres choisies selon l'invention sont en outre opacifiantes (c'est le cas notamment des compositions cristallisant partiellement lors de la cuisson qui forment déjà un fini plus ou moins opaque), l'opacité pouvant notamment être réglée en variant l'épaisseur des couches. Par « opacifiant », on entend que le revêtement diminue la transmission lumineuse TL du vitrage ou augmente sa densité optique, par rapport au même vitrage non muni dudit revêtement, en particulier diminue la transmission lumineuse TL du vitrage jusqu'à une valeur inférieure ou égale 10% ou augmente sa densité optique jusqu'à une valeur supérieure ou égale à 1, notamment supérieure ou égale à 3, le caractère opacifiant présentant notamment des avantages en termes de protection solaire ou des avantages en termes d'intimité à l'intérieur du véhicule.

Avantageusement, le toit de véhicule automobile incorporant le vitrage (revêtu) selon l'invention est ainsi plus ou moins opaque et présente une transmission lumineuse TL inférieure ou égale à 10%, et en particulier inférieure ou égale à 0.1%, ou une densité optique supérieure ou égale à 1, et en particulier supérieure ou égale à 3, alors qu'intrinsèquement (c'est-à-dire sans revêtement), le vitrage présente généralement une transmission lumineuse TL supérieure à 70% ou une densité optique de l'ordre de 0.05 ou moins. La transmission lumineuse TL est mesurée selon la norme EN 410 à l'aide de l'illuminant A (lampe normalisée), la mesure étant effectuée par exemple à l'aide d'un spectrophotomètre, et la densité optique est mesurée à l'aide d'un densitomètre (par exemple un densitomètre de référence 331C commercialisé par la société X-rite).

Les encres minérales choisies selon l'invention sont particulièrement adaptées au dépôt par impression numérique par jet d'encre sur des substrats en verre pour toit automobile, en choisissant par exemple des jeux de couleurs primaires permettant d'atteindre des gamuts étendus de couleurs. Chaque couleur primaire peut notamment être formulée à l'aide d'encre minérale selon l'invention en sélectionnant un pigment minéral adapté. La production du gamut peut ensuite être réalisée en utilisant plusieurs couleurs, par exemple par un jeu de quatre (modèle CMJN : cyan, magenta, jaune noir) ou six couleurs (système BGWORK : bleu, vert, blanc, orange, rouge, noir) le jeu de six couleurs étant préféré. La couleur souhaitée est par exemple définie par un ratio entre les différentes couleurs, et est obtenue avantageusement par superposition ou dépôt simultané des encres de chacune des couleurs dans les ratios (ou rapports ou proportions) retenus. Il n'est pas nécessaire de préparer une solution avec les bons ratios au préalable, les ratios sont par exemple simplement entrés dans le logiciel de gestion de l'imprimante au moment de l'impression. Ils peuvent donc être ajustés très aisément en fonction des décorations recherchées, la couleur résultante obtenue présentant une bonne uniformité.

Comme précisé ci-avant, le décor est de préférence imprimé avec un jeu de six couleurs selon le modèle BGWORK sur une, voire deux faces, deux décors différents pouvant le cas échéant être imprimés sur une face d'une feuille et sur une autre face opposée (l'une étant tournée vers l'extérieur et l'autre vers l'intérieur), ou encore sur une même face en superposant au moins deux couches différentes comme indiqué ultérieurement, pour un effet différent selon que l'on se place à l'extérieur ou à l'intérieur de l'habitacle.

Comme évoqué précédemment, le toit de véhicule automobile incorporant le vitrage selon l'invention peut être un vitrage monolithique, formé d'une seule feuille de verre; dans ce cas ladite feuille est revêtue par au moins une couche d'encre(s) sur au moins une face, en particulier la face destinée à être tournée vers l'intérieur de l'habitacle (ou face F2 d'un monolithique).

Plus généralement et de préférence, le vitrage est un vitrage feuilleté formé d'au moins deux feuilles de verre et d'un intercalaire, au moins l'une des feuilles de verre étant revêtue par au moins une couche d'encre(s) sur au moins une face, en particulier sur une face à l'intérieur du feuilleté (tournée vers l'intercalaire - face F2 ou F3) afin de protéger cette couche des intempéries ou de l'abrasion, ou sur la face du feuilleté devant se trouver côté intérieur de l'habitacle (face F4).

Le cas échéant plusieurs couches d'encres peuvent être superposées sur une même face en vue de réaliser une double image (différentes des deux côtés opposés). Par exemple et avantageusement, on peut réaliser au moins deux et en particulier trois couches ou impressions, avec un séchage intermédiaire après chaque impression, la première couche ou impression formant une première image (par exemple un effet carbone), la deuxième couche ou impression étant une couche opaque, en particulier de blanc, et la troisième couche ou impression formant une seconde image (par exemple un ciel ensoleillé ou étoilé). Le vitrage est alors formé de l'empilement de couches suivant, allant du côté destiné à être tourné à l'extérieur à celui destiné à être tourné vers l'intérieur de l'habitacle, ou inversement : verre/PVB/verre/couche1/couche2/couche3. Alternativement, l'empilement couche 1/couche 2/couche 3 peut être sur une face à l'intérieur du feuilleté (ou côté PVB) telle que l'une des faces F2 ou F3. Le verre côté extérieur est par exemple teinté et le verre tourné vers l'intérieur est par exemple clair ou extra clair ou teinté.

Selon un mode de réalisation préféré, le toit de véhicule automobile incorporant le vitrage selon l'invention est muni, sur une même face et/ou sur au moins deux faces différentes de feuille(s) de verre (sur une même feuille ou deux feuilles de verre différentes du vitrage), d'au moins deux revêtements différents ou couches différentes dont au moins une couche de la ou desdites encres selon l'invention, la seconde couche ou le second revêtement étant soit une autre couche d'encre(s) d'impression numérique selon l'invention comme déjà indiqué précédemment, soit une couche à effet décoratif différente d'une couche d'encre(s) selon l'invention, soit une couche ou un revêtement ou un film ou feuillet à effet fonctionnel supplémentaire, notamment en terme de confort thermique.

Par exemple et de façon avantageuse, la ou les couches d'encre(s) selon l'invention sont combinées avec un revêtement permettant de réfléchir et/ou d'absorber le rayonnement solaire et/ou la chaleur (tel qu'un revêtement dit « bas-émissif » ou de « contrôle solaire ») pour offrir un confort thermique accru à l'intérieur du véhicule, ce revêtement, dans le cas d'un vitrage feuilleté, se trouvant par exemple en face F2, F3 ou F4, ce revêtement étant notamment sous forme de couche(s) mince(s) (de quelques nanomètres à quelques dizaines de nanomètres d'épaisseur chacune).

Par exemple et de façon non limitative, le toit de véhicule automobile incorporant le vitrage peut être conçu avec une fonction de réflexion du rayonnement infrarouge afin notamment de préserver le confort thermique à l'intérieur du véhicule en été, obtenue par exemple:
- par une couche réfléchissante aux infrarouges, notamment à base d'argent, obtenue notamment par pulvérisation magnétron, et déposée par exemple sur la face F2 ou F3 dans le cas d'un feuilleté, et/ou
- par un film (ou feuille) ayant des propriétés de réflexion aux infrarouges en le laminant avec la ou les feuilles de verre (comme, et en plus de, la couche intercalaire dans le cas d'un vitrage feuilleté), par exemple un film polymérique à base de polyéthylène téraphtalate (PET),
et/ou le vitrage peut être doté d'une fonction de réflexion de la chaleur afin notamment de préserver le confort thermique à l'intérieur du véhicule en hiver, obtenue par exemple :
- par un revêtement bas-émissif, obtenu notamment par pulvérisation magnétron, et déposé, par exemple et dans le cas d'un feuilleté, sur l'une des faces F2, F3 ou F4, et/ou
- par un revêtement thermo-réfléchissant consistant à superposer des couches à indices de réfraction élevés et bas et à ajuster le filtre d'interférence obtenu (appelé « filtre de Bragg"), obtenu notamment par voie sol-gel, par exemple sur la face F2, F3 ou F4 dans le cas d'un feuilleté, etc.

Plus particulièrement, pour obtenir ces propriétés de confort thermique, on utilise au moins une couche fonctionnelle, notamment une couche fonctionnelle électro-conductrice, cette couche étant de préférence comprise entre deux couches minces diélectriques, cette couche fonctionnelle électro-conductrice étant par exemple choisie parmi les couches métalliques, notamment en argent ou en niobium, voire en or, et les couches d'un oxyde transparent conducteur (dite couche TCO), notamment choisi parmi l'oxyde d'indium et d'étain (dite couche ITO), les oxydes d'étain dopés (par exemple au fluor ou à l'antimoine), les oxydes de zinc dopés (par exemple à l'aluminium ou au gallium), ces différentes couches fonctionnelles pouvant être utilisées en combinaison (étant par exemple possible de mettre une ou plusieurs couches à l'argent en face F2 ou F3 et une couche TCO en face F4 notamment). Dans le cas où l'on utilise (notamment dans un empilement de couches) une ou plusieurs couches d'argent, l'épaisseur de la couche d'argent ou le cas échéant la somme des épaisseurs des couches d'argent est de préférence comprise entre 2 et 50 nm, notamment entre 3 et 40 nm, et dans le cas où l'empilement de couches minces comprend au moins une couche d'oxyde d'indium et d'étain, son épaisseur est de préférence comprise entre 30 et 200 nm, notamment entre 40 et 150 nm.

Afin de protéger la ou les couches électroconductrices, chacune de ces couches est de préférence encadrée par au moins deux couches diélectriques, ces couches diélectriques étant en particulier à base d'oxyde(s), de nitrure(s) et/ou d'oxynitrure(s) d'au moins un élément choisi parmi le silicium, l'aluminium, le titane, le zinc, le zirconium, l'étain, l'empilement comprenant notamment de préférence au moins une couche à base d'un nitrure, notamment un nitrure de silicium, les couches à base de nitrure possédant en particulier des propriétés de blocage permettant d'éviter l'oxydation des couches fonctionnelles et présentant une faible émissivité, l'épaisseur de chaque couche diélectrique étant par exemple comprise entre 2 et 100 nm.

Ce type d'empilement possède notamment des propriétés de conduction de l'électricité ou de réflexion de l'infrarouge utiles pour permettre selon les besoins l'isolation thermique de l'habitacle et/ou le chauffage, des amenées de courant pouvant également être couplées, telles que des bandes en pâte d'argent déposées par sérigraphie sur l'empilement de couches minces, au niveau de deux bords opposés de la feuille de verre.

Les couches de l'empilement précité peuvent être déposées par diverses techniques connues, notamment par dépôt chimique en phase vapeur (CVD), ou plus avantageusement par pulvérisation cathodique, notamment assistée par champ magnétique (procédé magnétron).

Dans un mode de réalisation non limitatif permettant d'obtenir un toit de véhicule automobile incorporant un vitrage feuilleté selon l'invention présentant, outre la ou les couches d'encre(s) selon l'invention, un bon confort thermique, le verre côté extérieur peut par exemple être clair et revêtu d'une couche réfléchissante aux infra-rouges et le verre tourné vers l'intérieur peut être teinté et revêtu d'une couche bas émissive qui permet de conserver la chaleur à l'intérieur du véhicule en hiver.

Dans le cas des revêtements thermo-réfléchissants ou présentant des propriétés de contrôle solaire, le revêtement peut aussi essentiellement consister en un empilement de couches diélectriques alternativement à bas et haut indices de réfraction (sans nécessairement la présence d'une couche fonctionnelle telle que précitée), par exemple des couches d'indice respectivement supérieur à 1.7 et inférieur à 1.5, les indices de réfraction des couches étant mesurés par exemple avec un ellipsomètre. Ce type d'empilement utilisant un arrangement basé sur des interférences optiques constructives alternant des couches à indices de réfraction élevés et faibles permet d'obtenir des propriétés de contrôle solaire à travers le vitrage sans affecter les propriétés optiques du vitrage initial (non revêtu). Les couches minces de l'empilement diélectrique peuvent être déposées par exemple par procédé magnétron ou par un procédé de revêtement humide, par exemple par un procédé d'élaboration sol-gel.

Comme déjà évoqué, les couches diélectriques peuvent être des couches de nitrure ou d'oxyde (métallique, métalloïde ou mixte), constituées essentiellement (à au moins 50%, et en particulier à au moins 80% en poids), voire uniquement (à l'exception des impuretés éventuellement présentes), d'azote (pour les nitrures) ou d'oxygène (pour les oxydes), et d'un ou plusieurs métaux et/ou métalloïdes mentionnés dans leur nom, la désignation "oxyde ou nitrure de métal ou de métalloïde" n'excluant pas, le cas échéant, la présence d'autres éléments chimiques, chaque couche pouvant notamment être dopée, et ne signifiant pas nécessairement que les oxydes ou nitrures sont stœchiométriques, ces oxydes ou nitrures pouvant en effet être sous-stœchiométriques, sur-staechiométriques ou stœchiométriques.

L'empilement diélectrique couvre au moins une partie ou une face entière de l'une des faces principales d'une feuille de verre, cette face étant notamment la face externe pour un vitrage monolithique, ou l'une des faces F2 ou F3 pour un vitrage feuilleté. Eventuellement, le vitrage peut également présenter un empilement de contrôle solaire sur au moins deux faces différentes (ces empilements pouvant être identiques ou différents) de manière à amplifier l'effet de contrôle solaire.

Le vitrage peut également comprendre d'autres revêtements, tels qu'une ou des couches de cristaux liquides (PDLC), des bandes conductrices, etc., selon les fonctionnalités ou caractéristiques recherchées.

Comme indiqué précédemment, la présente invention concerne également un procédé de fabrication d'un toit de véhicule automobile incorporant un vitrage selon l'invention tel que défini plus avant. Dans ce procédé, le dépôt de l'encre se fait par impression numérique de type jet d'encre. Dans cette technique permettant un dépôt et un séchage efficaces et rapides, l'encre liquide pulsée à travers des buses d'impression se sépare en gouttelettes, chaque microgoutte étant le cas échéant projetée et/ou déviée, électriquement ou magnétiquement, au cours de sa projection vers le support d'impression. L'image imprimée est ainsi formée d'un grand nombre de petites taches d'encres juxtaposées.

Dans un mode de réalisation particulièrement préféré, l'impression est réalisée en utilisant une machine d'impression à haute productivité (avec une vitesse d'impression par feuille de verre inférieure à 60 s) de type "imprimante à passage unique" (« single pass ») plus compatible avec le marché de l'automobile, les encres sélectionnées étant adaptées à cette méthode d'impression. Un exemple d'imprimante à passage unique est donné par exemple dans la demande de brevet WO2018050946A1, les imprimantes à passage unique pouvant le cas échéant utiliser une rotation de la tête d'impression et une impression vectorielle (au lieu du mode « raster » que possèdent les machines traditionnelles), aucune utilisation avec les encres et revêtements sélectionnés selon la présente invention avec un important taux de couverture et un effet opacifiant pour l'application recherchée n'ayant cependant été envisagé jusqu'à présent avec de telles imprimantes. De préférence également l'imprimante utilisée est équipée de six séries de têtes d'impression pour permettre l'impression par un jeu de six couleurs.

Pour réaliser un décor choisi, on peut par exemple utiliser, dans une étape préliminaire, une simple photo de bonne qualité, ou un fichier vectoriel correspondant au décor souhaité, et extraire les données numérique (en réalisant ce qu'on appelle un « RIP ») pour les mettre au format de la machine, avant d'effectuer l'impression.

Les encres utilisées selon l'invention peuvent être initialement réalisées en procédant à la formation d'une dispersion de la fritte (obtenue de façon connue à partir de la fusion à haute température d'un mélange de matières premières vitrifiables) ou des frittes de verre choisies dans un milieu de dispersion, au broyage de la dispersion pour réduire la taille des particules, et à la filtration de la dispersion pour éliminer les particules surdimensionnées. Pour les pigments, on peut également former une seconde dispersion du ou des pigments, broyer cette dispersion pour réduire la taille des particules et la filtrer et la combiner avec la dispersion de fritte(s) filtrée, ou la/les fritte(s) et le(s) pigment(s) peuvent être dispersés ensemble et broyés en une seule dispersion qui est ensuite filtrée. Des encres commerciales peuvent également être utilisées si elles remplissent les conditions de l'invention et/ou être adaptées (diluées, broyées, etc.) pour remplir les conditions de l'invention. En particulier, la fritte et les pigments éventuels peuvent être broyés selon les besoins jusqu'à ce que le D90 de la distribution granulométrique de la/des fritte(s) de verre et du ou des pigments soit inférieur à 2 µm, en particulier inférieur à 1 µm, et les propriétés rhéologiques, et en particulier la viscosité, de l'encre peuvent être le cas échéant ajustées.

Des encres disponibles commercialement pouvant être utilisées comme encres selon l'invention sont notamment les encres commercialisées sont la référence Spectrum R par la société Ferro.

Le cas échéant d'autres agents peuvent être ajoutés dans les encres formées et/ou choisies selon l'invention, tel qu'un agent dispersant (par exemple lors de l'ajout du solvant), un tensioactif (par exemple après broyage), un agent antiadhésif, etc, avant, pendant ou après les étapes de broyage et de filtrage.

Les compositions d'encre sont appliquées à la surface d'au moins une feuille de verre du vitrage de toit automobile pour former le ou les décors souhaités, généralement sur le verre flotté avant traitement thermique du vitrage et cuisson des encres. Le cas échéant, le vitrage est bombé dans un moule ou dans un support d'effondrement pour obtenir la forme souhaitée, tandis que la ou les compositions d'encre(s) est/sont cuite(s).

Le dépôt de chaque couche peut être suivi, si nécessaire, d'une étape de séchage pour évaporer le solvant, et solidifier et fixer la couche. L'encre peut le cas échéant être séchée à température ambiante (notamment en laissant le substrat revêtu de l'encre sécher à l'air libre), mais, du fait des grandes vitesses d'impression et de la nature du support, on effectue de préférence un séchage forcé, notamment par traitement thermique, convection et /ou rayonnement, notamment à moins de 200°C, par exemple entre 150 et 180°C. Le cas échéant, lorsque plusieurs couches d'encre sont imprimées, en particulier l'une sur l'autre, on réalise de préférence un séchage intermédiaire (par exemple aux environs de 150°C) après chaque impression.

Après dépôt et séchage éventuel, les encres minérales subissent un traitement thermique ou cuisson permettant notamment de fixer les encres et généralement opéré (notamment pour les vitrages feuilletés) lors du bombage usuel des verres, ce traitement thermique étant opéré pendant par exemple quelques centaines de secondes (par exemple 200 s) et à des températures de plusieurs centaines de degrés, par exemple de l'ordre de 650°C - 700°C.

Dans le procédé de réalisation d'un toit de véhicule automobile incorporant un vitrage monolithique bombé, le verre, préférentiellement trempé, est produit notamment dans un four de pliage sous pression. Le verre est d'abord chauffé à environ 650-700° C puis passe dans une presse et est pressé à la forme voulue. Comme déjà évoqué, avantageusement, les encres sélectionnées selon l'invention ne collent pas aux matrices de ladite presse.

Dans le procédé de réalisation d'un toit de véhicule automobile incorporant un vitrage feuilleté bombé, une fois le revêtement par la ou les couches d'encre(s) effectué sur l'une et/ou l'autre feuille de verre, la feuille de verre imprimée peut le cas échéant être précuite pour développer l'effet anti-adhésif du revêtement concerné. Les feuilles de verre sont placées l'une sur l'autre avant de simultanément bomber les feuilles par un procédé de bombage à chaud et cuire les encres. Un traitement de feuilletage pour assembler les feuilles de verre avec une couche intercalaire peut également être effectué en assemblant les feuilles, le cas échéant déjà bombées, avec l'intercalaire et en soumettant l'ensemble à une augmentation de la température et à une diminution de la pression par exemple par un procédé en autoclave, un procédé sous vide, un procédé de calandrage, etc.

Comme déjà évoqué précédemment, dans un mode de réalisation de l'invention, on peut déposer sur la couche d'encre(s) une fois appliquée, un agent anti-adhésif ou une couche anti-adhésive, par exemple par pulvérisation, impression digitale, rideau, rouleau ou sérigraphie, en plus de la ou des couches d'encres déposées.

Dans le cas d'autres couches combinées (par exemple bas-émissives, de contrôle solaire, etc), elles peuvent également être déposées en une autre étape avant ou après impression de la ou des couches d'encres avant assemblage éventuel, bombage éventuel, et cuisson.

Le cas échéant, le procédé peut également comprendre une opération de découpe de la ou des feuilles de verre, par exemple par jet d'eau ou par un outil mécanique, etc. suivie d'une opération de façonnage (meulage, biseautage, ...).

Les encres imprimées comprennent de préférence un ou des pigments(s) inorganiques qui présentent un diamètre moyen inférieur à 500 nm, plus préférentiellement un diamètre moyen compris entre 100 et 300 nm. Le diamètre moyen peut être mesuré à l'aide d'un microscope électronique à balayage (MEB) ou Scanning Electron Microscopy (SEM) en anglais. Lesdits pigments présentent l'avantage de ne pas avoir été altérés lors du procédé, notamment après séchage et cuisson des encres. Les encres imprimées montrent une faisabilité de laminage satisfaisante et offrent une bonne adhésion, sans nécessiter de traitement préalable du support et/ou l'utilisation d'un promoteur d'adhésion ou d'un primaire, les couches d'encre étant imprimées directement au contact du verre. En outre, les couches d'encre(s) fragilisent moins le verre mécaniquement que les émaux classiques, permettant notamment une impression sur une grande surface. Elles offrent également une bonne résistance aux rayures (d'environ 20N - mesurée au scléromètre), ou aux sollicitations mécaniques telles que les frottements métalliques, cette résistance étant compatible avec les spécifications de l'automobile, et de bons résultats au test de résistance au changement climatique de la norme EN1 096-2. Les décors obtenus après séchage et cuisson des encres sont également particulièrement résistants aux souillures, et les encres sélectionnées sont également stables à la lumière et présentent une excellente résistance aux rayonnements ultraviolet, du fait notamment de leur caractère minéral.

Le vitrage de la présente invention convient à l'équipement de tout véhicule de transport pouvant présenter un toit vitré (tel qu'une voiture, un autobus, etc.). Le toit de véhicule automobile vitré peut être fixe ou à ouverture, coulissant et/ou basculant et/ou relevable, ou encore panoramique ou de type canopée. Le toit et sa commande peuvent être manuels ou électriques. Le toit peut également comprendre un ou des éléments fonctionnels ou structurels supplémentaires comme un cadre, un ou plusieurs connecteurs, un ou plusieurs câbles, une ou plusieurs fixations, etc.

Les caractéristiques et les avantages de l'invention sont illustrés par les exemples non limitatifs décrits ci-après.

Exemple 1 : Dans le premier exemple selon l'invention, on a réalisé un vitrage feuilleté pour toit automobile formé de deux feuilles de verre séparées par une couche intermédiaire thermoplastique, ce vitrage étant décoré en face F2 et en face F4. Chaque feuille de verre était un verre flotté sodocalcique clair et neutre de 2,1 mm d'épaisseur commercialisé par la société Saint-Gobain Glass sous la marque Planiclear^{®} (désignée ensuite par l'abréviation PLC) et présentant, lorsqu'il est pris seul, une transmission lumineuse TL de 90%, et la couche intermédiaire thermoplastique était une couche de polyvinylbutyral de 0,76 mm d'épaisseur (désignée ensuite par l'abréviation PVB) commercialisée par la société Solutia sous la référence RC41. Le revêtement de la feuille de verre extérieure a été obtenu en réalisant d'abord un premier décor en face F2 sur la totalité de ladite face par impression jet d'encre à l'aide d'une machine à passage unique équipée de têtes d'impression six couleurs (avec un séchage après dépôt pendant 2 min à 130°C) pour obtenir une couche d'encres de 5 µm d'épaisseur (finale), la viscosité des encres au dépôt étant de moins de 50 mPa.s, puis en réalisant sur ce décor le dépôt d'une couche anti-adhésive par sérigraphie à une épaisseur humide de 15 µm (donnant une épaisseur finale de la couche de 6 µm) et à une viscosité de 15 Pa.s, avant pré-cuisson pendant 180s à 600°C.

Le revêtement de la feuille de verre intérieure a été obtenu en réalisant un second décor en face 4 sur la totalité de ladite face par impression jet d'encre à l'aide d'une machine à passage unique (avec un séchage après dépôt pendant 2 min à 130°C) pour obtenir une couche d'encres de 5 µm d'épaisseur (finale), la viscosité des encres au dépôt étant de moins de 50 mPa.s.

Les encres utilisées pour les décors étaient des encres de la gamme d'encres commercialisées par la société Ferro sous la référence Spectrum R, formées de frittes et de pigments inorganiques et présentant une valeur D90 de la distribution granulométrique inférieure à 2 µm, et le matériau de la couche anti-adhésive rajoutée était un émail de référence DV788380, commercialisé par la société Prince Minerals.

Les feuilles de verre revêtues ont ensuite été bombées pendant environ 200 s à des températures de l'ordre de 680°C.

On a observé que les deux verres pouvaient être séparés sans difficultés et qu'aucun transfert de matière n'était visible sur le verre intérieur.

Les feuilles revêtues ont ensuite été feuilletées via la couche intermédiaire de PVB. La densité optique du vitrage revêtu obtenu était supérieure à 3.

Après feuilletage, le premier décor était visible depuis l'extérieur de la voiture et le second décor visible depuis l'intérieur. Cette configuration a également permis d'inclure différents éléments fonctionnels (capteurs, antennes...) entre les deux verres tout en étant dissimulés par les décors.

Exemple 2 : Dans le second exemple selon l'invention, on a réalisé un vitrage feuilleté pour toit automobile formé de deux feuilles de verre séparées par une couche intermédiaire thermoplastique, ce vitrage étant décoré en face F2. La feuille de verre extérieure (destinée à être placée côté extérieur du véhicule) était un verre PLC de 2,1 mm d'épaisseur, l'autre feuille de verre (intérieure) était un verre flotté sodocalcique de 2. 1 mm d'épaisseur, teinté et présentant, lorsqu'il est utilisé seul, une transmission lumineuse TL de 71%, à savoir un verre de la référence TSA 3+ (désignée ensuite par l'abréviation TSA) de la société Saint-Gobain Glass, et la couche intermédiaire thermoplastique était une couche de PVB de 0,76 mm d'épaisseur comme dans l'exemple 1. Le revêtement de la feuille de verre extérieure a été obtenu en réalisant un décor en face F2 sur la totalité de ladite face par impression jet d'encre à l'aide d'une machine à passage unique équipée de têtes d'impression six couleurs (avec un séchage après dépôt pendant 2 min à 130°C) pour obtenir une couche d'encres de 5 µm d'épaisseur (finale), la viscosité des encres au dépôt étant de moins de 50 mPa.s, puis en réalisant sur ce décor le dépôt d'une couche anti-adhésive par sérigraphie à une épaisseur humide de 15 µm (donnant une épaisseur finale de la couche de 6 µm) et à une viscosité de 15 Pa.s, avant pré-cuisson pendant 180s à 600°C, le verre extérieur restant nu.

Les encres utilisées pour le décor et le matériau de la couche anti-adhésive rajoutée était ceux de l'exemple 1.

Les feuilles de verre revêtues ont ensuite été bombées comme dans l'exemple 1 et on a observé à nouveau que les deux verres pouvaient être séparés sans difficultés et qu'aucun transfert de matière n'était visible sur le verre intérieur.

Les feuilles revêtues ont ensuite été feuilletées comme dans l'exemple 1, la densité optique du vitrage revêtu obtenu étant supérieure à 3. Après feuilletage, le décor était visible depuis l'extérieur de la voiture, le côté intérieur du vitrage présentant un aspect homogène apporté par le chevauchement de la couche anti-adhésive et de la couche d'encres, la réflexion de la surface du verre en face F4 étant également conservée.

A titre de comparaison, pour le même vitrage réalisé de la même façon mais cette fois sans revêtement du décor par la couche anti-adhésive, les verres n'ont pas pu être décollés sans dégradation après bombage, un transfert de parties du décor ayant lieu du verre extérieur vers le verre intérieur (contrairement au cas de l'exemple 2 selon l'invention permettant d'obtenir un vitrage bombé sans dégrader l'aspect esthétique du décor en face F2).

Exemple 3 : Dans le troisième exemple selon l'invention, on a réalisé un vitrage feuilleté pour toit automobile formé de deux feuilles de verre séparées par une couche intermédiaire thermoplastique, ce vitrage étant décoré en face F3 et présentant une couche fonctionnelle de confort thermique en face F2. Chaque feuille de verre était un verre PLC de 2,1 mm d'épaisseur, et la couche intermédiaire thermoplastique était une couche de PVB comme dans l'exemple 1. Le revêtement de la feuille de verre intérieure a été obtenu en réalisant un décor en face F3 sur la totalité de ladite face par impression jet d'encre à l'aide d'une machine à passage unique équipée de têtes d'impression six couleurs pour obtenir une couche d'encres de 5 µm d'épaisseur (finale) (avec un séchage après dépôt pendant 2 min à 130°C), la viscosité des encres au dépôt étant de moins de 50 mPa.s, puis en réalisant sur ce décor le dépôt d'une couche anti-adhésive par sérigraphie à une épaisseur humide de 15 µm (donnant une épaisseur finale de la couche de 6 µm) et à une viscosité de 15 Pa.s, avant pré-cuisson pendant 180 s à 600°C.

La feuille de verre extérieure a en outre été revêtue d'une couche réfléchissante aux infrarouges à base d'argent, cette couche étant déposée par magnétron en face F2.

Les encres utilisées pour le décor étaient celles utilisées dans les exemples précédents, et le matériau de la couche anti-adhésive rajoutée était un émail de référence 1L6030, commercialisé par la société Johnson Matthey.

Les feuilles de verre revêtues ont ensuite été bombées comme dans l'exemple 1 et on a observé à nouveau que les deux verres pouvaient être séparés sans difficultés et qu'aucun transfert de matière n'était visible sur le verre intérieur.

Les feuilles revêtues ont ensuite été feuilletées comme dans l'exemple 1, la densité optique du vitrage revêtu obtenu étant supérieure à 3. Après feuilletage, le décor était visible depuis l'intérieur de la voiture, le côté extérieur du vitrage présentant un aspect homogène apporté par le chevauchement de la couche anti-adhésive et de la couche d'encres, la réflexion de la surface du verre en face F1 étant également conservée, la couche réfléchissante aux infra-rouges en face F2 assurant en outre le confort thermique des passagers.

A titre de comparaison, pour le même vitrage réalisé de la même façon mais cette fois sans revêtement du décor par la couche anti-adhésive, les verres n'ont pas pu être décollés sans dégradation après bombage, un transfert de parties du décor ayant lieu du verre intérieur vers le verre extérieur (contrairement au cas de l'exemple 3 selon l'invention permettant d'obtenir un vitrage bombé sans dégrader l'aspect esthétique du décor en face F3).

Exemple 4 : Dans le quatrième exemple selon l'invention, on a réalisé un vitrage feuilleté pour toit automobile formé de deux feuilles de verre séparées par une couche intermédiaire thermoplastique, ce vitrage étant décoré en face F2 et présentant une couche fonctionnelle de confort thermique en face F4. La feuille de verre extérieure était un verre PLC de 2,1 mm d'épaisseur, l'autre feuille de verre (intérieure) était un verre flotté sodocalcique de 2.1 mm d'épaisseur de référence VG10 de la société Saint-Gobain Glass, et la couche intermédiaire thermoplastique était une couche de PVB de 0,76 mm d'épaisseur comme dans l'exemple 1. Le revêtement de la feuille de verre extérieure a été obtenu en réalisant un décor en face F2 sur la totalité de ladite face par impression jet d'encre à l'aide d'une machine à passage unique équipée de têtes d'impression six couleurs pour obtenir une couche d'encres de 5 µm d'épaisseur (finale) (avec un séchage après dépôt pendant 2 min à 130°C), la viscosité des encres au dépôt étant de moins de 50 mPa.s, puis en réalisant sur ce décor le dépôt d'une couche anti-adhésive par sérigraphie à une épaisseur humide de 15 µm (donnant une épaisseur finale de la couche de 6µm) et à une viscosité de 15 Pa.s, avant pré-cuisson pendant 180 s à 600°C.

La feuille de verre intérieure a en outre été revêtue d'une couche bas-émissive, cette couche étant formée d'ITO et étant déposée par magnétron en face F4.

Les encres utilisées pour le décor étaient celles utilisées dans les exemples précédents, et le matériau de la couche anti-adhésive rajoutée était un émail de référence 1L6030, commercialisé par la société Johnson Matthey.

Les feuilles de verre revêtues ont ensuite été bombées comme dans l'exemple 1 et on a observé à nouveau que les deux verres pouvaient être séparés sans difficultés et qu'aucun transfert de matière n'était visible sur le verre intérieur.

Les feuilles revêtues ont ensuite été feuilletées comme dans l'exemple 1, la densité optique du vitrage revêtu obtenu étant supérieure à 3. Après feuilletage, le décor était visible depuis l'extérieur de la voiture, le côté intérieur du vitrage présentant un aspect homogène apporté par le chevauchement de la couche anti-adhésive et de la couche d'encres, la réflexion de la surface du verre en face F4 étant également conservée, la couche bas-émissive en face F4 assurant en outre le confort thermique des passagers.

Exemple 5 : Dans le cinquième exemple selon l'invention, on a réalisé un vitrage monolithique pour toit automobile formé d'une seule feuille de verre décorée en face F2. La feuille de verre était un verre PLC de 2,1 mm d'épaisseur. Le revêtement de la feuille de verre a été obtenu en réalisant le décor en face F2 sur la totalité de ladite face par impression jet d'encre à l'aide d'une machine à passage unique équipée de têtes d'impression six couleurs pour obtenir une couche d'encres de 5 µm d'épaisseur (finale) (avec un séchage après dépôt pendant 2 min à 130°C), la viscosité des encres au dépôt étant de moins de 50 mPa.s, puis en réalisant sur ce décor le dépôt d'une couche anti-adhésive par jet d'encre à une épaisseur humide de 15 µm (donnant une épaisseur finale de la couche de 6 µm) et à une viscosité de 15 Pa.s, avant pré-cuisson pendant 180s à 600°C.

Les encres utilisées pour le décor étaient les mêmes encres que dans l'exemple 1, et le matériau de la couche anti-adhésive rajoutée était une encre de référence DJ70474 commercialisée par la société Prince Minerals.

La feuille de verre revêtue a ensuite été bombée par pressage pendant quelques centaines de secondes à des températures de l'ordre de 680°C sans qu'aucun transfert de matière n'ait lieu sur la matrice de pressage. La densité optique du vitrage revêtu obtenu était supérieure à 3. Le décor, n'ayant subi aucune dégradation lors du bombage, était visible depuis l'extérieur, le côté intérieur du vitrage présentant un aspect noir « effet carbone » homogène apporté par le chevauchement de la couche anti-adhésive et de la couche d'encres, la réflexion de la surface du verre en face F1 étant également conservée.

A titre de comparaison, pour le même vitrage réalisé de la même façon mais cette fois sans revêtement du décor par la couche anti-adhésive, le bombage a souillé la matrice de pressage et le décor obtenu était incomplet (contrairement au cas de l'exemple 5 selon l'invention permettant d'obtenir un vitrage bombé sans dégrader l'aspect esthétique du décor en face F3 et sans dégrader l'outil de bombage).

Dans les exemples selon l'invention réalisés précédemment, les encres utilisées ont notamment montré :
- une faisabilité de laminage satisfaisante sur le Solutia RB41,
- une résistance aux rayures d'environ 20N, compatible avec les spécifications de l'automobile,
- de bons résultats au test de résistance au changement climatique de la norme EN1 096-2 sur les verres à couches (différant des spécifications habituelles de l'automobile mais visant à tester les mêmes caractéristiques).

En outre la résistance aux souillures ainsi que l'aptitude à être nettoyable ont été évaluées à l'aide des protocoles détaillés dans le norme EN14428 simulant le nettoyage d'une plaque de verre et ont donné des résultats satisfaisants.

Les vitrages selon l'invention peuvent notamment être utilisés avec avantage pour produire une nouvelle gamme de toit d'automobiles pour les véhicules de transport.

## Revendications

1. Procédé de fabrication d'un toit de véhicule automobile incorporant un vitrage, dans lequel on applique par impression numérique, en particulier par jet d'encre, sur au moins 40% de la surface de l'une des faces d'au moins une feuille de verre, au moins une couche opacifiante d'encre(s), en particulier au moins une couche d'encre(s) colorée(s), telle(s) que la composition de la ou lesdites encres comprend au moins une fritte de verre, et le cas échéant un ou des pigment(s) inorganique(s), avec une valeur D90 de la distribution granulométrique inférieure à 2 µm, et telle(s) que la ou lesdites encres présentent une viscosité comprise entre 1 et 50 mPa.s, la ou lesdites encres comprenant en outre un agent et/ou composant anti-adhésif et/ou au moins un agent anti-adhésif et/ou au moins une couche anti-adhésive étant en outre appliqué(e) sur au moins une couche d'encre(s) et/ou sur au moins une feuille de verre.

2. Procédé selon la revendication 1, **caractérisé en ce que** l'impression est réalisée en utilisant une machine d'impression à passage unique.

3. Procédé selon l'une des revendications 1 ou 2, **caractérisé en ce que** l'imprimante utilisée est équipée de six séries de têtes d'impression pour permettre l'impression par un jeu de six couleurs.

4. Procédé selon l'une des revendications 1 à 3, **caractérisé en ce que** la tension superficielle de l'encre est comprise entre 20 et 40 mN/m.

5. Toit de véhicule automobile susceptible d'être obtenu par le procédé selon l'une des revendications précédentes, ledit toit de véhicule incorporant un vitrage comprenant :
- une ou plusieurs feuilles de verre, au moins une feuille de verre étant revêtue sur au moins 40% de la surface d'au moins une face par au moins une couche opacifiante d'encre(s), telle(s) que la composition de la ou lesdites encres comprend au moins une fritte de verre, et
- au moins une couche d'encre(s) et/ou au moins une feuille de verre étant revêtue d'au moins un agent anti-adhésif et/ou d'au moins une couche anti-adhésive, et/ou
- au moins une couche d'encre(s) comprenant au moins un agent et/ou composant anti-adhésif.

6. Toit de véhicule automobile selon la revendication 5, **caractérisé en ce que** la couche opacifiante d'encre(s) est au moins une couche d'encre(s) colorée(s).

7. Toit de véhicule automobile selon l'une des revendications 5 ou 6, **caractérisé en ce que** la composition de la ou lesdites encres comprend un ou des pigment(s) inorganique(s).

8. Toit de véhicule automobile selon l'une des revendications 5 à 7, **caractérisé en ce que** ledit vitrage est un vitrage monolithique formé d'une seule feuille de verre, ladite feuille étant revêtue par au moins une couche de la ou desdites encres sur une face, en particulier la face F2, ou **caractérisé en ce que** ledit vitrage est préférentiellement un vitrage feuilleté formé d'au moins deux feuilles de verre et d'un intercalaire, au moins l'une desdites feuilles de verre étant revêtue par au moins une couche de la ou desdites encres sur une face, en particulier la face F2, F3, ou F4.

9. Toit de véhicule automobile selon l'une des revendications 5 à 8, **caractérisé en ce que** ledit vitrage présente une transmission lumineuse TL inférieure à 10% en particulier inférieure ou égale à 0.1%, ou une densité optique supérieure ou égale à 1, en particulier supérieure ou égale à 3.

10. Toit de véhicule automobile selon l'une des revendications 5 à 9, **caractérisé en ce que** deux décors différents sont imprimés, pour un effet différent à l'extérieur et à l'intérieur de l'habitacle.

11. Toit de véhicule automobile selon l'une des revendications 5 à 10, **caractérisé en ce que** plusieurs couches d'encres sont superposées sur une même face en vue de réaliser une double image, par exemple une première couche ou impression formant une première image, une deuxième couche ou impression étant une couche de blanc, et une troisième couche ou impression formant une seconde image.

12. Toit de véhicule automobile selon l'une des revendications 5 à 11, **caractérisé en ce que** ledit vitrage est muni, sur une même face et/ou sur au moins deux faces différentes de feuille(s) de verre du vitrage, d'au moins deux revêtements différents ou deux couches différentes dont au moins une couche de la ou desdites encres, la seconde couche ou le second revêtement étant soit une seconde couche minérale formée d'encre(s) d'impression numérique, soit une couche à effet décoratif différente de ladite ou desdites couches d'encre(s), soit une couche ou un revêtement ou un film ou feuillet à effet fonctionnel supplémentaire, notamment en terme de confort thermique, telle qu'un revêtement bas-émissif ou de contrôle solaire.

## Patentansprüche

1. Verfahren zum Herstellen eines Kraftfahrzeugdachs, in dem eine Verglasung eingebaut ist, wobei durch Digitaldruck, insbesondere durch Tintenstrahldruck, auf mindestens 40 % der Oberfläche von einer der Seiten von mindestens einer Glasscheibe mindestens eine trübende Schicht aus Tinte(n), insbesondere mindestens eine Schicht aus gefärbter/gefärbten Tinte(n), aufgebracht wird, wobei die Zusammensetzung der Tinte oder der Tinten mindestens eine Glasfritte und gegebenenfalls ein anorganisches Pigment oder anorganische Pigmente mit einem D90-Wert der Korngrößenverteilung von weniger als 2 µm umfasst, und wobei die Tinte oder die Tinten eine Viskosität, die zwischen 1 und 50 mPa.s liegt, aufweisen, die Tinte oder die Tinten ferner umfassend ein Antihaftmittel und/oder eine Antihaftkomponente und/oder mindestens ein Antihaftmittel und/oder mindestens eine Antihaftschicht, die ferner auf mindestens eine Schicht aus Tinte(n) und/oder auf mindestens eine Glasscheibe aufgebracht wird.

2. Verfahren nach Anspruch 1, **dadurch gekennzeichnet, dass** der Druck durch Verwenden einer Einzeldurchgangsdruckmaschine umgesetzt wird.

3. Verfahren nach einem der Ansprüche 1 oder 2,
**dadurch gekennzeichnet, dass** der verwendete Drucker mit sechs Druckkopfreihen zum Ermöglichen des Drucks durch einen Sechsfarbensatz ausgestattet ist.

4. Verfahren nach einem der Ansprüche 1 bis 3,
**dadurch gekennzeichnet, dass** die Oberflächenspannung der Tinte zwischen 20 und 40 mN/m liegt.

5. Kraftfahrzeugdach, das durch das Verfahren nach einem der vorstehenden Ansprüche erhältlich ist, wobei in dem Fahrzeugdach eine Verglasung eingebaut ist, umfassend:
- eine oder mehrere Glasscheiben, wobei mindestens eine Glasscheibe auf mindestens 40 % der Oberfläche von mindestens einer Seite durch mindestens eine trübende Schicht aus Tinte(n) beschichtet ist, wobei die Zusammensetzung der Tinte oder der Tinten mindestens eine Glasfritte umfasst, und
- mindestens eine Schicht aus Tinte(n) und/oder mindestens eine Glasscheibe, die mit mindestens einem Antihaftmittel und/oder mindestens einer Antihaftschicht beschichtet ist, und/oder
- mindestens eine Schicht aus Tinte(n), umfassend mindestens ein Antihaftmittel und/oder eine Antihaftkomponente.

6. Kraftfahrzeugdach nach Anspruch 5, **dadurch gekennzeichnet, dass** die trübende Schicht aus Tinte(n) mindestens eine Schicht aus gefärbter/gefärbten Tinte(n) ist.

7. Kraftfahrzeugdach nach einem der Ansprüche 5 oder 6,
**dadurch gekennzeichnet, dass** die Zusammensetzung der Tinte oder der Tinten ein organisches Pigment oder anorganische Pigmente umfasst.

8. Kraftfahrzeugdach nach einem der Ansprüche 5 bis 7,
**dadurch gekennzeichnet, dass** die Verglasung eine monolithische Verglasung ist, die aus einer einzigen Glasscheibe ausgebildet ist, wobei die Scheibe durch mindestens eine Schicht der Tinte oder der Tinten auf einer Seite, insbesondere der Seite F2, beschichtet ist, oder **dadurch gekennzeichnet, dass** die Verglasung vorzugsweise eine Verbundverglasung ist, die aus mindestens zwei Glasscheiben und einer Zwischenschicht ausgebildet ist, wobei mindestens eine der Glasscheiben durch mindestens eine Schicht der Tinte oder der Tinten auf einer Seite, insbesondere der Seite F2, F3 oder F4, beschichtet ist.

9. Kraftfahrzeugdach nach einem der Ansprüche 5 bis 8,
**dadurch gekennzeichnet, dass** die Verglasung eine Lichtdurchlässigkeit TL von kleiner als 10 %, insbesondere kleiner als oder gleich 0,1 %, oder eine optische Dichte von größer als oder gleich 1, insbesondere größer als oder gleich 3, aufweist.

10. Kraftfahrzeugdach nach einem der Ansprüche 5 bis 9,
**dadurch gekennzeichnet, dass** zwei unterschiedliche Dekore für einen unterschiedlichen Effekt in dem Außenbereich und dem Innenbereich der Fahrgastzelle aufgedruckt sind.

11. Kraftfahrzeugdach nach einem der Ansprüche 5 bis 10,
**dadurch gekennzeichnet, dass** mehrere Schichten aus Tinte auf einer gleichen Seite übereinandergelegt sind, um ein Doppelbild umzusetzen, zum Beispiel eine erste Schicht oder ein erster Druck, die ein erstes Bild ausbilden, eine zweite Schicht oder ein zweiter Druck, die/der eine Weißschicht ist, und eine dritte Schicht oder ein dritter Druck, die ein zweites Bild ausbilden.

12. Kraftfahrzeugdach nach einem der Ansprüche 5 bis 11,
**dadurch gekennzeichnet, dass** die Verglasung auf einer gleichen Seite und/oder auf mindestens zwei unterschiedlichen Seiten der Glasscheibe(n) der Verglasung mit mindestens zwei unterschiedlichen Beschichtungen oder zwei unterschiedlichen Schichten versehen ist, darunter mindestens eine Schicht aus Tinte oder Tinten, wobei die zweite Schicht oder die zweite Beschichtung entweder eine zweite mineralische Schicht ist, die aus Digitaldrucktinte(n) ausgebildet ist, oder eine Schicht mit einem dekorativen Effekt, die sich von der oder den Schichten aus Tinte(n) unterscheidet, oder eine Schicht oder eine Beschichtung oder eine Folie oder ein Blatt mit einem zusätzlichen funktionalen Effekt, insbesondere im Hinblick auf den thermischen Komfort, wie eine niedrig emittierende Beschichtung oder eine Sonnenschutzbeschichtung, ist.

## Claims

1. A method for manufacturing a motor vehicle roof incorporating a glazing, in which at least one opacifying layer of ink(s), in particular at least one layer of colored ink(s), is applied by digital printing, in particular by inkjet, over at least 40% of the surface of one of the faces of at least one glass sheet, such that the composition of said ink(s) comprises at least one glass frit, and where applicable one or more inorganic pigment(s), with a D90 value for the particle size distribution of less than 2 µm, and such that said ink(s) have a viscosity of between 1 and 50 mPa.s, said ink(s) further comprising a non-stick agent and/or a non-stick component and/or at least one non-stick agent and/or at least one non-stick layer being further applied to at least one layer of ink(s) and/or to at least one glass sheet.

2. The method according to claim 1, **characterized in that** the printing is performed using a single-pass printing machine.

3. The method according to one of claims 1 or 2, **characterized in that** the printer used is equipped with six series of print heads to enable printing with a set of six colors.

4. The method according to one of claims 1 to 3, **characterized in that** the surface tension of the ink is between 20 and 40 mN/m.

5. A motor vehicle roof able to be obtained by the method according to one of the preceding claims, said vehicle roof incorporating a glazing comprising:
- one or more glass sheets, at least one glass sheet being coated over at least 40% of the surface of at least one face with at least one opacifying layer of ink(s), such that the composition of said ink(s) comprises at least one glass frit, and
- at least one layer of ink(s) and/or at least one glass sheet being coated with at least one non-stick agent and/or at least one non-stick layer, and/or
- at least one layer of ink(s) comprising at least one non-stick agent and/or one non-stick component.

6. The motor vehicle roof according to claim 5, **characterized in that** the opacifying layer of ink(s) is at least one layer of colored ink(s).

7. The motor vehicle roof according to one of claims 5 or 6, **characterized in that** the composition of said ink(s) comprises one or more inorganic pigment(s).

8. The motor vehicle roof according to one of claims 5 to 7, **characterized in that** said glazing is a monolithic glazing formed of a single glass sheet, said sheet being coated with at least one layer of said ink(s) on one face, in particular face F2, or **characterized in that** said glazing is preferentially a laminated glazing formed of at least two glass sheets and an interlayer, at least one of said glass sheets being coated with at least one layer of said ink(s) on one face, in particular face F2, F3, or F4.

9. The motor vehicle roof according to one of claims 5 to 8, **characterized in that** said glazing has a light transmission TL of less than 10%, in particular less than or equal to 0.1%, or an optical density of greater than or equal to 1, in particular greater than or equal to 3.

10. The motor vehicle roof according to one of claims 5 to 9, **characterized in that** two different decorations are printed, for a different effect on the outside and on the inside of the passenger compartment.

11. The motor vehicle roof according to one of claims 5 to 10, **characterized in that** several layers of inks are overlayed on the same face in order to produce a double image, for example a first layer or print forming a first image, a second layer or print being a white layer, and a third layer or print forming a second image.

12. The motor vehicle roof according to one of claims 5 to 11, **characterized in that** said glazing is equipped, on the same face and/or on at least two different faces of glass sheet(s) of the glazing, with at least two different coatings or two different layers including at least one layer of said ink(s), the second layer or the second coating being either a second mineral layer formed of digital printing ink(s), or a layer with a different decorative effect from said layer or layers of ink(s), or a layer or a coating or a film or a sheet with an additional functional effect, particularly in terms of thermal comfort, such as a low-emissivity or solar control coating.
